Europäisches Patentamt

European Patent Office

Office européen des brevets

(11) Publication number: **0 434 106 A1**

## EUROPEAN PATENT APPLICATION

(21) Application number: 90203050.1

(22) Date of filing: 19.11.90

(51) Int. Cl.5: **F16L 55/027**

(30) Priority: 22.11.89 NL 8902887

(43) Date of publication of application:
26.06.91 Bulletin 91/26

(84) Designated Contracting States:
AT BE CH DE DK ES FR GB GR IT LI LU NL SE

(71) Applicant: INSTROMET B.V.
Munstermanstraat 6
NL-7064 KA Silvolde(NL)

(72) Inventor: Holtkamp, Boudewijn Aernout
Geert Grootestraat 14
NL-7009 MJ Doetinchem(NL)

(74) Representative: Morel, Christiaan F., Dr.Ir.
MORELPATENT Laarstraat 3
NL-8166 GR Emst (Epe)(NL)

(54) **Fixing method for a flow director.**

(57) Flow director, intended for placing in a pipe which is flowed through by a medium. The flow director comprises two annular elements (1, 2) placed one after the other, at least one element (1, 2) grips round a perforated plate (3, 4). The annular elements (1, 2) have a diameter which is slightly smaller than the diameter of the pipe, and the external surface of the two annular elements at the end edges facing each other is provided with a bevel (5, 6). A clamping ring (10) with a wedge-shaped cross-section is fitted between the two annular elements (1, 2). The annular elements (1, 2) are connected to each other by means of bolts (7) and can be drawn towards each other while pressing the wedge-shaped clamping ring (10) radially outwards. Preferably the wedge-shaped clamping ring (10) is annular and is made up of several segments, or of one segment, through the latter being provided with a saw cut. The ends of the segments are pressed towards each other by an elastic annular band (14) which is guided in a groove (13) provided in the external surface of the segments (10).

# FIXING METHOD FOR A FLOW DIRECTOR

The invention relates to a flow director, intended for placing in a pipe which is flowed through by a medium.

Flow directors are known and serve to convert the flow profile of a flowing medium into a symmetrical, homogeneous profile. This conversion of the flow profile is of importance, for example, in the case of turbine gas meters, in order to ensure that the flow profile of the flowing medium is virtually equal to the flow profile for which the turbine gas meter is calibrated. Placing such a flow director upstream of the turbine gas meter means that it is possible to dispense with the requirement of fitting of a straight pipe part upstream of the turbine gas meter in order to even out the flow.

The known flow directors were fitted hitherto in a pipe of a plant by means of flange couplings. The pipe system of the plant thus had to be equipped or adapted in order to permit the fitting of such flow directors.

The object of the invention is then to provide a flow director which can be fitted easily in pipes of already existing plants, without additional measures having to be taken.

This object is achieved according to the invention in that the flow director comprises two annular elements placed one after the other, viewed in the direction of flow of the medium, of which at least one element grips round a perforated plate, which annular elements have a diameter which is slightly smaller than the diameter of the pipe, and the external surface of the two annular elements at the end edges facing each other is provided with a bevel, and a clamping ring with a wedge-shaped cross-section is fitted between the two annular elements, the slanting sides of which ring interact with the respective bevels of the annular elements, and the annular elements are connected to each other by means of bolts and can be drawn towards each other while pressing the wedge-shaped clamping ring radially outwards.

In this way the flow director can easily be placed in an existing pipe and fixed therein by tightening the bolts connecting the two annular elements. An additional advantage is that the flow director can be placed at any desired distance from, for example, a gas turbine meter.

The wedge-shaped clamping ring according to the invention preferably comprises several segments which together form a ring or an annular clamping ring which is provided with a saw cut and is wedge-shaped in cross-section, and the ends of the segments are pressed towards each other by an elastic annular band which is guided in a groove provided in the external surface of the segments and extending in the periperhal direction of the clamping ring. This design makes it possible for the flow director to be fitted and removed as an integral unit so that, for example in the event of soiling, rapid and simple replacement is possible. The clamping ring preferably comprises one or more segments because, through the saw cuts then situated in the ring, the ring can be made of a firm material and can still be pressed outwards against the wall of the pipe.

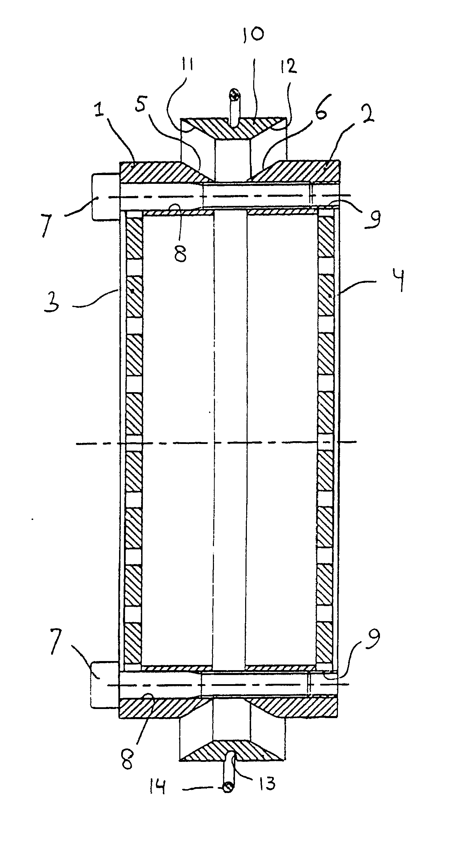

The invention is explained in greater detail with reference the drawing, which shows a schematic cross-section of a possible embodiment of the flow director according to the invention.

As can be seen from the drawing, the flow director comprises two annular elements 1 and 2 which are placed coaxially next to each other, and each of which grips round a perforated plate 3, 4 respectively. These perforated plates have such a passage percentage that the flow velocity of the medium is increased to a high value, and under the influence thereof the flow profile present is converted into an ideal, symmetrical and homogeneous flow profile. The external surface of each of the annular elements 1, 2 is provided at the end edges facing each other with a bevel 5, 6 respectively, the two bevels forming an angle of almost 120 degrees between them.

The annular elements are connected to each other by means of bolts 7 which project through holes 8 provided in one annular element and engage in tapped holes 9 provided in the other element. The distance between the two annular elements can thus be varied by tightening or loosening the bolts. A total of six bolts 7, fitted at equal distances from each other, are present.

Fitted between the two annular elements is a clamping ring 10, comprising two or more segments and made of synthetic material. The clamping ring has a wedge-shaped cross section with slanting sides 11, 12 which in the fitted state rest against the bevels 5, 6 of the annular elements. When compressed, the clamping ring has an external diameter which is slightly smaller than the external diameter of the annular elements. A groove 13, containing an elastic band 14, is provided in the peripheral direction in the external surface of the clamping ring. This band 14 presses the segments of the clamping ring against each other, so that the slanting sides 11 and 12 always rest against the bevels 5 and 6.

The flow director can be fitted in a simple manner. The flow director is pushed into an existing pipe in a pressure-free state, in other words, the two annular elements are standing at such a distance from each other that the clamping ring is not projecting beyond the external surface of the annular elements. It must be ensured here that the two perforated plates are standing at right angles to the longitudinal direction of the pipe. Tightening the bolts by working across alternately causes the segments of the clamping ring to be pressed radially outwards by the slanting surfaces until the external surface thereof comes into contact with the internal surface of the pipe. The clamping action between the clamping ring and the internal surface of the pipe ensures good fixing of the flow director inside the pipe. When the flow director is being removed the bolts 7 need only be loosened, so that the distance between the two annular elements increases, and the segments of the clamping ring are moved inwards by the elastic band 14. The flow director can then be pulled out of the pipe using a suitable tool such as a bent pin.

It will be clear that the invention is not restricted to the embodiment shown and described here, but that a large number of modifications are possible for the expert. For example, the angle between the bevels can also have a value which differs from 120 degrees. The clamping ring will preferably be made up of two segments, each taking up a semi-circle. It is, of course, possible to use more segments, in order to obtain a more uniform pressure on the clamping ring.

**Claims**

1. Flow director, intended for placing in a pipe which is flowed through by a medium, characterized in that the flow director comprises two annular elements (1, 2) placed one after the other, viewed in the direction of flow of the medium, of which at least one element (1, 2) grips round a perforated plate (3, 4), which annular elements (1, 2) have a diameter which is slightly smaller than the diameter of the pipe, and the external surface of the two annular elements at the end edges facing each other is provided with a bevel (5, 6), and a clamping ring (10) with a wedge-shaped cross-section is fitted between the two annular elements (1, 2), the slanting sides (11, 12) of which ring (10) interact with the respective bevels (5, 6) of the annular elements (1, 2), and the annular elements (1, 2) are connected to each other by means of bolts (7) and can be drawn towards each other while pressing the wedge-shaped clamping ring (10) radially outwards.

2. Flow director according to Claim 1, characterized in that the wedge-shaped clamping ring (10) is annular and is made up of several segments, or of one segment, through the latter being provided with a saw cut.

3. Flow director according to Claim 2, characterized in that the ends of the segments are pressed towards each other by an elastic annular band (14) which is guided in a groove (13) provided in the external surface of the segments (10) and extending in the periperhal direction of the clamping ring (10).

4. Flow director according to Claim 1, characterized in that the wedge-shaped clamping ring (10) is a flexible clamping ring.

5. Flow director according to any of Claims 1, 2 or 3, characterized in that the clamping ring (10) is made of a synthetic material or a metal such as aluminium or steel.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 050 479 (BAUMANN) <br> * figures * <br> — — — | 1-3 | F 16 L <br> 55/027 |
| A | EP-A-0 332 942 (UNIT INSTRUMENTS, INC.) <br> * figures * <br> — — — | 1 | |
| Y | WO-A-8 402 156 (TELEFONAKTIEBOLAGET L M ERICSSON) <br> * page 3, line 15; figure 3 * <br> — — — — — | 1-3 | |
| | | | **TECHNICAL FIELDS SEARCHED (Int. Cl.5)** |
| | | | F 16 L <br> F 16 K |

The present search report has been drawn up for all claims

| Place of search | Date of completion of search | Examiner |
|---|---|---|
| The Hague | 23 January 91 | BARTSCH A.W. |